Europäisches Patentamt

(19) European Patent Office

Office européen des brevets

(11) Publication number: **0 034 861**
**B1**

## (12) EUROPEAN PATENT SPECIFICATION

(45) Date of publication of patent specification: **04.01.84**

(51) Int. Cl.³: **A 01 J 25/13**

(21) Application number: **81200179.0**

(22) Date of filing: **16.02.81**

(54) **Cheese mould and/or follower and method for manufacturing them.**

(30) Priority: **20.02.80 NL 8001029**

(43) Date of publication of application:
**02.09.81 Bulletin 81/35**

(45) Publication of the grant of the patent:
**04.01.84 Bulletin 84/1**

(84) Designated Contracting States:
**AT BE CH DE FR GB IT LI SE**

(56) References cited:
**NL - A - 7 302 524**
**NL - A - 7 705 990**
**NL - A - 7 900 831**

(73) Proprietor: **Geessink, Bernard Theodoor**
**Frans Halslaan 5**
**NL-9581 EX Musselkanaal (NL)**

(72) Inventor: **Geessink, Bernard Theodoor**
**Frans Halslaan 5**
**NL-9581 EX Musselkanaal (NL)**

(74) Representative: **de Wit, Gerard Frederik, Ir.**
**Breitnerlaan 146**
**NL-2596 HG Den Haag (NL)**

Courier Press, Leamington Spa, England.

Cheese mould and/or follower and method for manufacturing them

The invention relates to a cheese mould and/or follower of plastics material having fine holes provided in the wall for draining away the whey and an inner surface and to a method for manufacturing them.

Cheese moulds and/or followers of the above indicated type in which the fine holes at the outer side of the wall discharge into larger cylindrical recesses are shown in the Dutch Patent Application 7302524, whereas the Dutch Patent Application 7705990 shows cheese moulds of the above indicated type in which the fine holes pass through the whole wall thickness.

With these moulds it is possible to make cheese having a reasonable rind without using cheese cloth. It has been shown, however, that a quick and efficient rind forming has great economic value, firstly because certain sorts of cheese can better be stored when the rind is good and sound and secondly because the time of manufacture can be shortened if the forming of the rind occurs under favorable circumstances.

With cheese moulds and followers a further important item is the possibility to clean them sufficiently by subjecting them to a normal cleaning process. In this respect it is not only important that no curd remnants are left back in the holes, but also not on the surface if the latter is not smooth.

The invention aims to provide a cheese mould and/or follower of the above indicated type, which at the one hand procures a quick and good rind forming and at the other hand nevertheless can be easily cleaned.

The above aims are surprisingly realized by providing that the inner surface is scratched producing a surface comprising elongated recesses and projections abutting the scratches, the scratches being visible to the naked eye and the surface being rough to the touch.

Such a mould or follower leads to a rind forming that is in many instances considerably better than with the same mould without the scratches. Also, it has appeared that no difficulties occur with respect to cleaning them.

Though any manufacturing method resulting in scratches can be used when applying the invention, a mechanical treatment for making the scratches is preferred. Herewith it is pointed out that making scratches according to the invention only adds very little to the manufacturing costs and implies a very important improvement of the cheese surface, that is the rind. Such a treatment can be scouring, preferably with so called coarse sand paper, treating with a steel brush and possibly with a rasp or a scouring substance. Therewith in plastic material, such as polyethylene or polypropylene a surface is created, that locally has recesses, which normally are elongated and are called scratches, but at the edge of these recesses or at their ends projections or fine threads are present.

Accordingly a preferred embodiment of the invention provides that threadlike projections abut the scratches.

The cheese mould shown in the Dutch Patent Application 7705990 further has an inner surface which is provided with a regular pattern of fine grooves or ribs. According to a further elaboration of the invention the rind forming in such a mould can be improved by providing that the scratches are superimposed on said regular pattern.

In this respect it is remarked that pressed or moulded grooves give generally a less satisfactory rind forming, when the scratches according to the invention have not been applied, so that this embodiment of the invention even enables to speed up the mechanical treatment of the inner wall: The fine grooves can be made by moulding and thereafter the combination of the fine grooves and the scratches gives a cheese mould having excessive good rind forming properties. The scratches may have a direction or orientation that is completely independent of that of the fine grooves.

A further advantage of the invention is, that it is possible to reduce the height of irregularities, such as ribs or pyramids by removing the top parts of the ribs or pyramids, as naturally happens when scouring the surface. This means, that it is possible to reduce the rind thickness and/or modify the rind by varying the duration or intensity of the scratch making treatment. By reason of this fact it is often very easy to adapt a cheese mould to make it suitable for a special type of cheese and/or special desires, simply by varying the scratching treatment.

The invention also provide a method for manufacturing a cheese mould and/or follower of plastics material having a wall with fine holes provided in said wall for draining away the whey with an inner surface, which method is characterized in that said inner surface is subjected to scratching with a mechanical cleaning means such as a steel brush, course sand paper, a rasp or a scouring substance. This treatment can be applied as well to newly manufactured cheese moulds or followers as to cheese moulds or followers which have already been in use during a considerable time.

The scratches formed by applying the invention are visible to the naked eye and generally give, when feeling the surface with a finger a palpable roughness. Of course the surface is also less reflectant than the surface of a corresponding cheese mould, but not according to the invention, that means of which the surface has not been scratched.

Finally a very simple embodiment of the method according to the invention consists in that with a non-sharp cutting means, such as a chisel or fraise small grooves are applied in the inner surface of a cheese mould or follower of plastics material, by reason of which at the edges of the grooves irregular fine recesses and at least partly thread-like projections are created. The irregular recesses and projections obtained in this way are comparable to the scratches obtained by rubbing with a cleaning means, as described above. The quite remarkable thing is, that work, that up to now would have been unconditionally rejected by each man of the art, to wit very many burrs, to the contrary has superior qualities.

## Claims

1. Cheese mould and/or follower of plastics material having fine holes provided in the wall for draining away the whey and an inner surface, characterized in that the inner surface is scratched producing a surface comprising elongated recesses and projections abutting the scratches, the scratches being visible to the naked eye and the surface being rough to the touch.

2. Cheese mould and/or follower according to claim 1, characterized in that the projections abutting the scratches are in the form of thread-like projections.

3. Cheese mould and/or follower according to claim 1 or 2, the inner surface of which is provided with a regular pattern of fine grooves or ribs, characterized in that the scratches are superimposed on said regular pattern.

4. Method for manufacturing a cheese mould and/or follower of plastics material having a wall with fine holes provided in said wall for draining away the whey with an inner surface according to one or more of the claims 1—3, characterized in that said inner surface is subjected to scratching with a mechanical cleaning means such as a steel brush, coarse sand paper, a rasp or a scouring substance.

5. Method for manufacturing a cheese mould and/or follower, characterized in that with a non-sharp cutting means, such as a chisel or fraise small grooves are applied in the inner surface of the cheese mould or follower of plastics material, by reason of which at the edges of the grooves irregular fine recesses and at least partly threadlike projections are formed.

## Patentansprüche

1. Käseform und/oder Folger aus Kunststoff mit feinen Löchern in der Wand zur Entnahme der Molken und mit einer inneren Oberfläche, dadurch gekennzeichnet, dass die innere Oberfläche gekratzt ist unter Bildung einer Oberfläche mit länglichen Aussparungen und grenzend an den Kratzen vorspringenden Teilen, wobei die Kratzen für das nakte Auge sichtbar sind und die Oberfläche rauh anfühlt.

2. Käseform und/oder Folger nach Anspruch 1, dadurch gekennzeichnet, dass die vorspringenden Teile die an den Kratzen grenzen in der Form drahtähnlicher Vorsprünge sind.

3. Käseform und/oder Folger nach Anspruch 1 oder 2, von der die innere Oberfläche mit einem regularen Muster von feinen Nuten oder Rippen versehen ist, dadurch gekennzeichnet, dass die Kratzen über das Muster superponiert sind.

4. Verfahren zur Anfertigung einer Käseform und/oder Folger aus Kunststoff mit einer Wand mit feinen Löchern die in die Wand gemacht sind um den Molken abfliessen zu lassen mit einer inneren Oberfläche nach einem oder mehreren der Ansprüche 1—3, dadurch gekennzeichnet, dass die genannte innere Oberfläche einer Kratzung mit einem mechanischen Reinigungsmittel wie einer Stahlbrüste, grobem Sandpapier, einer Raspel oder einem Scheuermittel unterworfen wird.

5. Verfahren zur Anfertigung einer Käseform und/oder Folger, dadurch gekennzeichnet, dass mit einem unscharfen Schneidemittel, wie einem Meisel oder einer Fräse, kleine Nuten in die innere Oberfläche der Form oder des Folgers von Kunststoff gemacht werden, wodurch bei den Rändern der Nuten unregelmässige feine Aussparungen und wenigstens teilweise drahtähnliche Vorsprünge gebildet werden.

## Revendications

1. Moule et/ou plateau pour fromages, en matière plastique, comportant de fins orifices pratiqués dans la paroi pour égoutter le petit lait, et une paroi interne, caractérisé par le fait que la paroi interne est griffée, formant une surface présentant des recoins allongés et des saillies prolongeant les griffures, ces griffures étant visibles à l'oeil nu, et la surface étant rugueuse au toucher.

2. Moule et/ou plateau pour fromages suivant la revendication 1, caractérisé par le fait que les projections prolongeant les griffures sont en forme de pas de vis.

3. Moule et/ou plateau pour fromages suivant les revendications 1 et 2, dont la paroi interne est pourvue d'un dessin régulier de fines rainures ou nervures, caractérisé par le fait que les griffures sont superposées au dit dessin.

4. Méthode pour fabriquer un moule ou un plateau pour fromages, en matière plastique, possédant une paroi munie de fins orifices pour égoutter le petit lait, avec une surface interne correspondant à une ou plusieurs des revendications 1 à 3, caractérisée par le fait que la dite surface interne est soumise à un grattage par un moyen mécanique de nettoyage tel qu'une brosse métallique, du paper de verre grossier, une râpe ou une substance décapante.

5. Méthode pour fabriquer un moule et/ou plateau pour fromages, caractérisée par le fait que de petites rainures sont pratiquées dans la paroi interne du moule ou plateau pour fromages, en matière plastique, au moyen d'un instrument de découpe non tranchant, tel qu'un ciseau ou une fraise. On crée ainsi de petits recoins irréguliers au bord des rainures qui ont, du moins en partie, la forme de saillies en pas de vis.